# EUROPEAN PATENT APPLICATION

(11) **EP 4 425 729 A1**
(43) Date of publication of application: **04.09.2024**
(21) Application number: 23218902.7
(22) Date of filing: 20.12.2023
(51) Int. Cl.: H02J 1/00, B60L 50/60, B60L 58/20, H02H 3/087

(54) **VEHICLE POWER SUPPLY SYSTEM AND VEHICLE COMPRISING SAME**

(30) Priority: 28.02.2023 CN 202310197057
(71) Applicant: Nio Technology (Anhui) Co., Ltd, Hefei City, Anhui 230611 (CN)
(72) Inventor: HUANG, Xi, Hefei City, Anhui 230611 (CN); JIN, Jiahang, Hefei City, Anhui 230611 (CN)
(74) Representative: Vossius & Partner Patentanwälte Rechtsanwälte mbB

(57) **Abstract**

The disclosure relates to a vehicle power supply system (10) and a vehicle comprising same. The system (10) comprises: a low-voltage battery (101), which is used to output a first voltage to serve as a first power supply; a voltage converter (102), which is configured to receive a second voltage that is output by a vehicle high-voltage battery (20), and convert the second voltage into the first voltage to serve as a second power supply that outputs the first voltage; and a power multiplexer (103), which comprises a first terminal (A) and a second terminal (B) respectively connected to the first power supply and the second power supply, wherein the first terminal (A) is capable of powering one of upper and lower half-bridges of a motor controller (30) of a vehicle, and the second terminal (B) is capable of powering the other of the upper and lower half-bridges of the motor controller (30); and the power multiplexer (103) is capable of controlling whether to allow for electricity flow from the second terminal B() to the first terminal (A) and electricity flow from the first terminal (A) to the second terminal (B).

## Description

### Technical Field

The disclosure relates to the field of providing a redundant power supply for a vehicle, and in particular relates to a vehicle power supply system and a vehicle comprising same.

### Background Art

In new energy vehicles, a conventional power electronics unit (PEU) with high functional safety requirements can use power from a high-voltage direct-current terminal to charge a redundant backup power supply. As a five-in-one product that integrates a DC-DC conversion function, power supply topology architectures of PEU, etc. can be further optimized in-depth in terms of circuit and topology. The products currently available on the market are only physically integrated, but do not have an in-depth layout in terms of product and vehicle level.

In view of this, there is a need to propose an improved vehicle power supply system.

### Summary

The embodiments of the disclosure provide a vehicle power supply system and a vehicle comprising same, providing a safe redundant power supply for a motor controller.

According to one aspect of the disclosure, a vehicle power supply system is provided. The system comprises: a low-voltage battery, which is used to output a first voltage to serve as a first power supply; a voltage converter, which is configured to receive a second voltage that is output by a vehicle high-voltage battery, and convert the second voltage into the first voltage to serve as a second power supply that outputs the first voltage; and a power multiplexer, which comprises a first terminal and a second terminal respectively connected to the first power supply and the second power supply, wherein the first terminal is capable of powering one of upper and lower half-bridges of a motor controller of a vehicle, and the second terminal is capable of powering the other of the upper and lower half-bridges of the motor controller; and the power multiplexer is capable of controlling whether to allow for electricity flow from the second terminal to the first terminal and electricity flow from the first terminal to the second terminal.

In some embodiments of the disclosure, optionally, the low-voltage battery and the voltage converter are integrated in a single cavity, and the second power supply is capable of charging the low-voltage battery.

In some embodiments of the disclosure, optionally, the power multiplexer comprises: a first branch, which is configured to be capable of controlling whether to allow for the electricity flow from the second terminal to the first terminal; and a second branch, which is configured to be capable of controlling whether to allow for the electricity flow from the first terminal to the second terminal.

In some embodiments of the disclosure, optionally, the first branch comprises a first unidirectional conduction component and a first controlled conduction component connected in series; and/or the second branch comprises a second unidirectional conduction component and a second controlled conduction component connected in series, wherein the first unidirectional conduction component is configured to allow for the electricity flow from the second terminal to the first terminal; the first controlled conduction component is configured to allow for the electricity flow that is less than a first current threshold; the second unidirectional conduction component is configured to allow for the electricity flow from the first terminal to the second terminal; and the second controlled conduction component is configured to allow for the electricity flow that is less than a second current threshold.

In some embodiments of the disclosure, optionally, the first branch and the second branch form a loop.

In some embodiments of the disclosure, optionally, the first current threshold is less than 2 A; and/or the second current threshold is less than 2 A.

In some embodiments of the disclosure, optionally, the first unidirectional conduction component is a diode or an electronic fuse; and/or the first controlled conduction component is an electronic fuse; and/or the second unidirectional conduction component is a diode or an electronic fuse; and/or the second controlled conduction component is an electronic fuse.

In some embodiments of the disclosure, optionally, the first controlled conduction component is configured to be disconnected when the current from the second terminal to the first terminal is greater than the first current threshold; and/or the second controlled conduction component is configured to be disconnected when the current from the first terminal to the second terminal is greater than the second current threshold.

In some embodiments of the disclosure, optionally, the first terminal and/or the second terminal are/is further used to power at least one of a system basis chip and a microprocessor of the vehicle.

According to another aspect of the disclosure, a vehicle is provided. The vehicle comprises: a motor controller; and any vehicle power supply system as described above, wherein the first terminal powers one of upper and lower half-bridges of the motor controller, and the second terminal powers the other of the upper and lower half-bridges of the motor controller.

According to some embodiments of the disclosure, a vehicle power supply system and a vehicle comprising same are provided, which can be used to provide a safe redundant power supply for a motor controller, so as to meet the design goals of automotive safety integrity level (ASIL) C/D.

### Brief Description of the Drawings

The above and other objectives and advantages of the disclosure will be more thorough and clearer from the following detailed description in conjunction with the drawings, where the same or similar elements are represented by the same reference numerals.
FIG. 1 shows a vehicle power supply system according to an embodiment of the disclosure; and
FIG. 2 shows a power multiplexer according to an embodiment of the disclosure.

### Detailed Description of Embodiments

For the sake of brevity and illustrative purposes, the principles of the disclosure are mainly described herein with reference to its exemplary embodiments. However, those skilled in the art would have readily appreciated that the same principle can be equivalently applied to all types of vehicle power supply systems and vehicles including same, and same or similar principles can be implemented therein, with any such variations do not depart from the true spirit and scope of the disclosure.

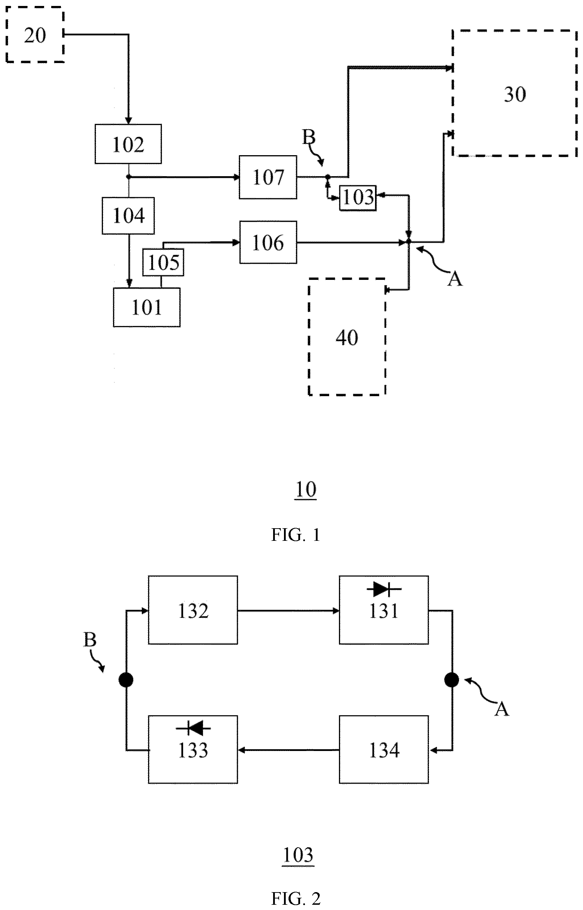

According to one aspect of the disclosure, a vehicle power supply system is provided. The vehicle power supply system 10 (hereinafter referred to as the system 10) comprises a low-voltage battery 101, a voltage converter 102 and a power multiplexer 103. In order to clearly illustrate the principles of the system 10 of the disclosure, a vehicle high-voltage battery 20 (e.g., a vehicle traction battery), a motor controller 30 and a system basis chip (SBC) 40 are also shown in FIG. 1 together with the system 10. The system 10 can provide a stable redundant power supply to various functional components, especially the motor controller 30, of a vehicle so that the vehicle equipped with the system 10 can meet the requirements of automotive safety integrity level (ASIL) C/D.

The low-voltage battery 101 of the system 10 may output a first voltage (e.g., 48 V) to point A, etc. shown in FIG. 1 to serve as a first power supply of the system 10. Electric devices connected to point A can all be at least driven by the first power supply to operate. In addition, a fuse 105 and an electromagnetic compatibility filter 106 may be arranged on a path between the low-voltage battery 101 and the output point A, so as to achieve fault isolation between circuits and output stable voltage to the electric devices.

The voltage converter 102 of the system 10 may receive a second voltage (e.g., 400 V) output by the vehicle high-voltage battery 20 and convert the second voltage to a first voltage, and the converted voltage may serve as a second power supply in the system 10. The second voltage may provide a second power supply to point B, etc. shown in FIG. 1, and the electric devices connected to point B can all be at least driven by the second power supply to operate. In addition, an electromagnetic compatibility filter 107 may be arranged on a path between the voltage converter 102 and the output point B.

It should be noted that, as described above by way of example, the first voltage may be 48 V, and the second voltage may be 400 V When there is no lack of electricity and the functions are normal, both the first power supply and the second power supply are stable direct-current power supplies. In some other examples, the first voltage and the second voltage may have other values, which will not be limited in the disclosure. In addition, according to common definitions in the art, "high voltage" herein may be hundreds of volts, and "low voltage" may be tens of volts, which expressions are widely used in the art.

The power multiplexer 103 of the system 10 is used to realize mutual redundant backup of the first power supply and the second power supply, and allow the operating state of one of the power supplies to be not restricted by whether the other power supply can operate normally. Specifically, point A (and the electric device connected to it) shown in FIG. 1 may also be driven by the second power supply, and point B (and the electric device connected to it) may also be driven by the first power supply. In addition, after the first power supply cannot continue the service due to some faults, the operation of the second power supply will not be affected, and vice versa.

In some embodiments of the disclosure, the low-voltage battery 101 and the voltage converter 102 are integrated in a single cavity, and the second power supply can charge the low-voltage battery 101. In this way, two power supplies can be integrated in one cavity, which can save on valuable space resources and is conducive to the miniaturization of power supply. As shown in FIG. 1, the voltage converter 102 can be connected to the low-voltage battery 101 via a safety switch 104, so as to realize fault isolation between them.

The power multiplexer 103 comprises a first terminal (near point A in the figure, also referred to as "terminal A" in the disclosure) and a second terminal (near point B in the figure, also referred to as "terminal B" in the disclosure), which are respectively connected to the first power supply and the second power supply. The first terminal of the power multiplexer 103 can power one of the upper and lower half-bridges (e.g., the lower half-bridge) of the motor controller 30 of the vehicle, and the second terminal can power the other of the upper and lower half-bridges (e.g., the upper half-bridge) of the motor controller 30. In some other examples, the power supply sequence can be exchanged, i.e., the first terminal of the power multiplexer 103 powers the upper half-bridge of the motor controller 30, and the second terminal of the power multiplexer 103 power the lower half-bridge of the motor controller 30.

In addition, the power multiplexer 103 can control whether to allow for the electricity flow from the second terminal to the first terminal, and control whether to allow for the electricity flow from the first terminal to the second terminal. For example, under normal conditions, the electric devices connected to the first terminal and the second terminal of the power multiplexer 103 can both operate normally, and at this time can allow for the electricity flow from the second terminal to the first terminal and allow for the electricity flow from the first terminal to the second terminal, so as to realize redundant backup of the first power supply and the second power supply. That is, for the electric device on the first terminal side, the first power supply and the second power supply simultaneously power the electric device, so that the normal operation of the electric device on the first terminal side will not be affected when either of the power supplies is out of service due to a fault. Similarly, for the electric device on the second terminal side, the first power supply and the second power supply simultaneously power the electric device, so that the normal operation of the electric device on the second terminal side will not be affected when either of the power supplies is out of service due to a fault.

However, when there is a fault on the first terminal side or the second terminal side, it is necessary to control the electricity flow to prevent propagation of the fault. Specifically, the power multiplexer 103 may control to restrict the electricity flow from the second terminal to the first terminal or to restrict the electricity flow from the first terminal to the second terminal. For example, when the device on the first terminal side is short-circuited due to a fault, the first power supply is drawn down, and the power multiplexer 103 can control to cut off of the electricity flow from the second terminal to the first terminal to prevent propagation of the fault to the second power supply and the electric device connected to point B. Similarly, when the device on the second terminal is short-circuited due to a fault, the second power supply is drawn down, and the power multiplexer 103 can control to cut off of the electricity flow from the first terminal to the second terminal to prevent propagation of the fault to the first power supply and the electric device connected to point A.

FIG. 2 shows a feasible structural form of the power multiplexer 103. It should be understood that, in addition to the form shown in FIG. 2, the power multiplexer 103 may also be present in other feasible layouts, which will not be listed in the disclosure.

As shown in FIG. 2, in some embodiments of the disclosure, the power multiplexer 103 comprises a first branch located above and a second branch located below. The first branch can control whether to allow for the electricity flow from the second terminal (terminal B) to the first terminal (terminal A), and the second branch can control whether to allow for the electricity flow from the first terminal (terminal A) to the second terminal (terminal B). As shown in FIG. 2, the first branch and the second branch form a loop, thereby realizing the design that the first power supply and the second power supply are mutually redundant.

In some embodiments of the disclosure, the first branch circuit comprises a first unidirectional conduction component 131 and a first controlled conduction component 132 connected in series. In addition, the second branch comprises a second unidirectional conduction component 133 and a second controlled conduction component 134 connected in series. The first unidirectional conduction component 131 may allow for the electricity flow from the second terminal to the first terminal (as shown in the direction of the arrow on the first branch), and the first controlled conduction component 132 may allow for the electricity flow that is less than a first current threshold. Therefore, the first branch allows for the stable electricity flow only when the current on the first branch is in the direction of the arrow shown in the figure (from the second terminal to the first terminal) and the current is less than the first current threshold (e.g., 2 A or less). That is, only at this time can the second power supply serve as a backup power supply for the first power supply with respect to the electric device connected to A.

Similarly, the second unidirectional conduction component 133 may allow for the electricity flow from the first terminal to the second terminal (as shown in the direction of the arrow on the second branch), and the second controlled conduction component 134 is configured to allow for the electricity flow that is less than the second current threshold. Therefore, the second branch allows for the stable electricity flow only when the current on the second branch is in the direction of the arrow in the figure (from the first terminal to the second terminal) and the current is less than the second current threshold (e.g., 2 A or less). That is, only at this time can the first power supply serve as a backup power supply for the second power supply with respect to the electric device connected to B.

In some examples, the first unidirectional conduction component 131 is a diode, and the first controlled conduction component 132 is an electronic fuse. At this time, by mean of the combined control of the diode and the electronic fuse, the first branch can allow for the electricity flow from the second terminal (terminal B) to the first terminal (terminal A) that is less than the first current threshold. In some other examples, the first unidirectional conduction component 131 may also be an electronic fuse, which may be programmed to allow for the electricity flow from the second terminal to the first terminal (as shown in the direction of the arrow on the first branch). At this time, the first unidirectional conduction component 131 and the first controlled conduction component 132 are designed back-to-back.

Similarly, the second unidirectional conduction component 133 is a diode or an electronic fuse, and the second controlled conduction component 134 is an electronic fuse. At this time, by means of the combined control of the diode and the electronic fuse, the second branch can allow for the electricity flow from the first terminal (terminal A) to the second terminal (terminal B) that is less than the second current threshold. In some other examples, the second unidirectional conduction component 133 can also be an electronic fuse, which may be programmed to allow for the electricity flow from the first terminal to the second terminal (as shown in the direction of the arrow on the second branch). At this time, the second unidirectional conduction component 133 and the second controlled conduction component 134 are designed back-to-back.

In some examples, the first controlled conduction component 132 can be automatically disconnected when the current from the second terminal to the first terminal is greater than the first current threshold, and the second controlled conduction component 134 can be automatically disconnected when the current from the first terminal to the second terminal is greater than the second current threshold. When the current in the first controlled conduction component 132 or the second controlled conduction component 134 exceeds the first current threshold or the second current threshold, the first controlled conduction component 132 or the second controlled conduction component 134 will generate heat inside and then generate a disconnection signal to disconnect the circuit.

For example, when the device connected to point A is short-circuited, the first controlled conduction component 132 will detect the short-circuit and perform current-limiting protection. At this time, point B will not be affected by the short-circuit at point A, and the power supply branch at point B can ensure the motor controller 30, etc. to be in a safe state. For example, when the device connected to point B is short-circuited, the second controlled conduction component 134 can detect the short-circuit and perform current-limiting protection. At this time, point A will not be affected by the short-circuit at point B, and the power supply branch at point A can ensure the motor controller 30, etc. to be in a safe state. In addition, when point A or point B is over-voltage, the presence of the reverse cut-off diode or electronic fuse can ensure that the other power supply point will not be affected.

In some embodiments of the disclosure, the first terminal and the second terminal may also be used to power the vehicle system basis chip 40 as shown in FIG. 1, the microprocessor (not shown in the figure), etc. Thus, these electric devices can also be connected to a power supply system with redundant hot backup.

According to another aspect of the disclosure, a vehicle is provided. The vehicle comprises: a motor controller; and any vehicle power supply system as described above, wherein the first terminal powers one of the upper and lower half-bridges of the motor controller, and the second terminal powers the other of the upper and lower half-bridges of the motor controller.

In the vehicle power supply system proposed in some examples of the disclosure described above, two mutually redundant backup power supplies can be formed, and can be used to power PEU, the upper and lower bridges of the motor controller, etc., so as to meet the design goals of automotive safety integrity level (ASIL) C/D. According to some examples of the disclosure described above, the electric drive assembly hardware power supply design and the five-in-one electric drive assembly hardware design are simplified, which can increase the redundancy and availability of power supply while reducing the cost and complexity in design of PEU power topology.

The foregoing descriptions are merely the implementations of the disclosure, but are not intended to limit the scope of protection of the disclosure. Any feasible variation or replacement conceived by a person skilled in the art within the technical scope disclosed in the disclosure shall fall within the scope of protection of the disclosure. Without conflicts, the implementations of the disclosure and features in the implementations may also be combined with each other. The scope of protection of the disclosure shall be subject to recitations of the claims.

## Claims

1. A vehicle power supply system, comprising:
a low-voltage battery, which is used to output a first voltage to serve as a first power supply;
a voltage converter, which is configured to receive a second voltage that is output by a vehicle high-voltage battery, and convert the second voltage into the first voltage to serve as a second power supply that outputs the first voltage; and
a power multiplexer, which comprises a first terminal and a second terminal respectively connected to the first power supply and the second power supply, wherein the first terminal is capable of powering one of upper and lower half-bridges of a motor controller of a vehicle, and the second terminal is capable of powering the other of the upper and lower half-bridges of the motor controller; and
the power multiplexer is capable of controlling whether to allow for electricity flow from the second terminal to the first terminal and electricity flow from the first terminal to the second terminal.

2. The system according to claim 1, wherein the low-voltage battery and the voltage converter are integrated in a single cavity, and the second power supply is capable of charging the low-voltage battery.

3. The system according to claim 1 or 2, wherein the power multiplexer comprises:
a first branch, which is configured to be capable of controlling whether to allow for the electricity flow from the second terminal to the first terminal; and
a second branch, which is configured to be capable of controlling whether to allow for the electricity flow from the first terminal to the second terminal.

4. The system according to any one of claims 1 to 3, wherein the first branch comprises a first unidirectional conduction component and a first controlled conduction component connected in series; and/or the second branch comprises a second unidirectional conduction component and a second controlled conduction component connected in series, wherein
the first unidirectional conduction component is configured to allow for the electricity flow from the second terminal to the first terminal;
the first controlled conduction component is configured to allow for the electricity flow that is less than a first current threshold;
the second unidirectional conduction component is configured to allow for the electricity flow from the first terminal to the second terminal; and
the second controlled conduction component is configured to allow for the electricity flow that is less than a second current threshold.

5. The system according to claim 4, wherein the first branch and the second branch form a loop.

6. The system according to claim 4 or 5, wherein the first current threshold is less than 2 A; and/or the second current threshold is less than 2 A.

7. The system according to claim 4, 5, or 6, wherein the first unidirectional conduction component is a diode or an electronic fuse; and/or
the first controlled conduction component is an electronic fuse; and/or
the second unidirectional conduction component is a diode or an electronic fuse; and/or the second controlled conduction component is an electronic fuse.

8. The system according to claim 7, wherein the first controlled conduction component is configured to be disconnected when the current from the second terminal to the first terminal is greater than the first current threshold; and/or
the second controlled conduction component is configured to be disconnected when the current from the first terminal to the second terminal is greater than the second current threshold.

9. The system according to any one of claims 1 to 8, wherein the first terminal and/or the second terminal are/is further used to power at least one of a system basis chip and a microprocessor of the vehicle.

10. A vehicle, comprising:
a motor controller; and
the system according to any one of claims 1-9, wherein
the first terminal powers one of upper and lower half-bridges of the motor controller, and the second terminal powers the other of the upper and lower half-bridges of the motor controller.
